# EUROPÄISCHE PATENTANMELDUNG

(11) **EP 1 433 915 A2**
(43) Veröffentlichungstag der Anmeldung: **30.06.2004**
(21) Anmeldenummer: 03028193.5
(22) Anmeldetag: 09.12.2003
(51) Int. Cl.: E05F 5/02, E05F 5/08, E05F 5/10

(54) **Dämpfungsvorrichtung**

(30) Priorität: 24.12.2002 DE 10261591
(71) Anmelder: Grass GmbH, 6973 Höchst/Vlbg. (AT)
(72) Erfinder: Zimmer, Martin, 77866 Rheinau 1 (DE); Ahlfeld, Jürgen, 88138 Weissensberg (DE); Thallner, Rainer, 77866 Rheinau 1 (DE); Müller, Wolfgang, 6890 Lustenau (AT)
(74) Vertreter: Riebling, Peter, Dr.-Ing.

(57) **Zusammenfassung**

Die Erfindung betrifft eine Dämpfungsvorrichtung zur Dämpfung der Bewegungsenergie von beweglichen Möbelteilen, welche ein erstes Dämpfungselement mit einem ersten Zylinder und einem darin längs verschiebbaren ersten Kolben aufweist und mindestens ein zweites Dämpfungselement mit einem zweiten Zylinder und einem darin längs verschiebbaren zweiten Kolben. Die beiden Dämpfungselemente sind in serieller Anordnung hintereinander angeordnet und bilden eine integrale Anordnung. Die Erfindung zeichnet sich dadurch aus, dass jedes der beiden Dämpfungselemente als Luftdämpfer ausgebildet ist und jeweils eine Kompressionskammer und eine Expansionskammer veränderlichen Volumens umfasst; wobei die Dämpfungswirkung der Dämpfungselemente durch Steuerkanäle beeinflusst wird, welche die Luftverteilungen und -strömungen innerhalb und zwischen den Kompressionskammern und/oder den Expansionskammern steuern.

## Beschreibung

Die Erfindung betrifft eine Dämpfungsvorrichtung, insbesondere zur Dämpfung der Bewegungsenergie von beweglichen Möbelteilen, wie z.B. Türen, Schubladen oder Klappen, nach den Merkmalen des Oberbegriffs des Patentanspruchs 1.

Aus dem Stand der Technik sind Dämpfungsvorrichtung verschiedenster Bauart bekannt.

DE 201 17 031 U1 zeigt eine Dämpfvorrichtung mit einem fließfähigen Medium in Zylindern mit Kolben und Kolbenstangen und einer geringen Einbautiefe. Die Zylinder sind als Teleskopzylinder ausgeführt, wobei der mittlere Zylinder sowohl als Kolben als auch als Druckzylinder für den in diesem Falle letzten Druck- bzw. Arbeitskolben dient. Die geringe Bauhöhe bedingt einen großen Außendurchmesser und somit eine große Einpressbohrung. Ebenfalls ergibt die geringe Bauhöhe kurze Arbeitswege und daher in Verbindung mit einem fließfähigen Medium einen harten Dämpfcharakter. Fließfähige Medien haben zudem den Nachteil möglicher Leckagen. Ein weiterer Nachteil ergibt sich aus den kurzen Führungsflächen und dem dadurch möglichen Verkanten der Kolben im. Zylinder.

Die DE 202 04 986 U1 zeigt eine Dämpfvorrichtung, die ebenfalls teleskopartig ausgeführt ist, deren Arbeitsweg aber wesentlich länger ist und dadurch in der Dämpfungswirkung besser steuerbar wird. Auch ein Verkanten wird dadurch weitgehend vermieden. Wie aus der DE 201 17 051 U1 bekannt ist, wird auch hier die Bremswirkung durch zwei Stufen erreicht, von denen die erste Stufe eine Bremswirkung mittels Feder und die zweite Stufe eine Dämpfwirkung mittels Luft bewirkt.

Diese zweistufig hintereinander wirkenden Funktionen haben den Nachteil, dass bei einer zu starken Feder in der ersten Stufe die das Möbelteil, z.B. eine Türe, wieder aufgestoßen wird und bei einer zu schwachen Feder diese durchschlägt, somit also keine Wirkung der zweiten Stufe zustande kommen kann. Eine zu starke Feder verhindert auch ein vollkommenes Schließen der Türe. Türen, Klappen oder dergleichen haben unterschiedlich große Massen und verschiedene Schließgeschwindigkeiten. Die dadurch resultierenden, ungleich großen, kinetischen Energien würden verschiedene, jeweils angepasste Federn benötigen. Dazu kommt noch, dass auch die zweite Stufe eine Feder aufweisen muss, um die totale Offenstellung des Systems zu gewährleisten. Mit einem Magnet, wie beschrieben, kann die zweite Stufe nicht in ihre Ausgangslage gebracht werden. Ein Magnet und das dazu notwendige Gegenstück aus Eisen würden zu hart aufeinander prallen. Es würde dadurch von vornherein der Dämpfeffekt zunichte gemacht.

Aufgabe der Erfindung ist es, diese Nachteile zu vermeiden und eine Dämpfungsvorrichtung zu schaffen, die bei kleinem Außendurchmesser eine große Brems- und Dämpfwirkung auf relativ kurzem Weg erzielt.

Die Lösung dieser Aufgabe erfolgt erfindungsgemäß durch die Merkmale des Patentanspruchs 1.

Erfindungsgemäß ist jedes der beiden Dämpfungselemente als Luftdämpfer ausgebildet und umfasst jeweils eine Kompressionskammer und eine Expansionskammer veränderlichen Volumens, wobei die Dämpfungswirkung der Dämpfungselemente durch Steuerkanäle beeinflusst wird, welche die Luftverteilungen und -strömungen innerhalb und zwischen den Kompressionskammern und/oder den Expansionskammern steuern.

Es ergibt sich dadurch der Vorteil, dass die Dämpfungsvorrichtung sehr kompakt ausgebildet werden kann, wobei sie einen großen Bereich von bei Möbeln auftretenden kinetischen Energien aufzunehmen vermag. Falls notwendig, kann die Dämpfungswirkung durch entsprechende Ausgestaltung der Steuerkanäle in weiten Bereichen eingestellt werden.

Vorteilhafte Ausführungsformen und Weiterbildungen der Erfindung sind in den abhängigen Ansprüchen angegeben.

Die Kolben sind abdichtend in den Zylindern geführt, das heißt, bei jedem Dämpfungselement ist zwischen dem größten Durchmesser des entsprechenden Kolbens und dem Innendurchmesser des zugeordneten Zylinders eine Dichtung vorgesehen, welche die jeweilige Kompressionskammer gegenüber der zugeordneten Expansionskammer abdichtet.

Die Kolben der beiden Dämpfungselemente sind lose miteinander gekoppelt, wobei der Kolben des ersten Dämpfungselements mit dem Kolben des zweiten Dämpfungselements während des gesamten Arbeitsweges der Dämpfungsvorrichtung unmittelbar in Wirkverbindung steht.

In vorteilhafter Weise schließt sich die zweite Expansionskammer unmittelbar an die erste Kompressionskammer an und ist durch eine Trennwand von dieser getrennt. Hierbei ragt die Kolbenstange des zweiten Kolbens durch eine Öfnung in der Trennwand in die erste Kompressionskammer hinein, wobei die Stirnseite der zweiten Kobenstange in einer entsprechenden Aussparung des ersten Kolbens aufgenommen ist.

Die erste Kompressionskammer ist gegenüber der zweiten Expansionskammer abgedichtet, indem zwischen der Kolbenstange des zweiten Kolbens und der Bohrung der Trennwand eine Dichtung angeordnet ist.

Innerhalb des zweiten Dämpfungselements ist vorzugsweise eine Feder zur Ausübung einer Rückstellkraft auf die Dämpfungselemente angeordnet.

Zur Entlüftung während der Rückstellung des Dämpfungselements und zur Vermeidung eines Unterdrucks ist die zweite Expansionskammer vorzugsweise über eine Entlüftungsbohrung mit der Außenumgebung verbunden.

Die Kolbenstange des ersten Kolbens ist durch einen Zylinderdeckel ins Freie geführt, wobei die erste Expansionskammer vorzugsweise über einen zwischen Zylinderdeckel und Kolbenstange verbleibenden Spalt mit der Außenumgebung verbunden ist und dadurch entlüftet wird.

In einer ersten speziellen Ausgestaltung der Erfindung weist der erste Kolben in Längsrichtung einen Steuerkanal in Form einer durchgehenden Bohrung auf, der die erste Kompressionskammer mit der Außenumgebung verbindet und während eines Dämpfungsvorgangs für eine kontrollierte Entlüftung der ersten Kompressionskammer sorgt. In gleicher Weise weist auch der zweite Kolben in Längsrichtung einen Steuerkanal in Form einer durchgehenden Bohrung auf, der die zweite Kompressionskammer mit der Außenumgebung verbindet und diese während des Arbeitsvorgangs kontrolliert entlüftet.

Vorzugsweise sind die beiden Steuerkanäle untereinander luftleitend verbunden, wobei nur der Steuerkanal des ersten Kolbens unmittelbar mit der Außenumgebung in Verbindung steht. Im Bereich der Aussparung des ersten Kolbens ist vorzugsweise ein Leckluftkanal ausgebildet, über den die erste Kompressionskammer mit dem ersten Steuerkanal verbunden ist.

Die Dämpfungsvorrichtung der ersten Ausführungsform eignet sich insbesondere zur Dämpfung von Massen mit relativ geringer kinetischer Energie, wie z.B. einer kleinen Möbeltür.

In einer zweiten Ausgestaltung der Erfindung ist an der Außenseite und in Längsrichtung der zweiten Kolbenstange, ausgehend von deren freiem Ende, ein Steuerkanal angeordnet, der sich über eine bestimmte Länge der Kolbenstange erstreckt und während eines bestimmten Abschnitts des Arbeitswegs des zweiten Kolbens die erste Kompressionskammer mit der zweiten Expansionskammer verbindet. Die während des Dämpfungsvorgangs in der ersten Kompressionskammer komprimierte Luft kann dadurch über den Steuerkanal und die Öffnung der zweiten Expansionskammer entweichen.

Außerdem ist an der Innenwand und in Längsrichtung des zweiten Zylinders, ausgehend vom Endbereich des Zylinders, ein weiterer Steuerkanal angeordnet, der sich über eine bestimmte Länge des Zylinders erstreckt und während eines bestimmten Abschnitts des Arbeitswegs des zweiten Kolbens die zweite Kompressionskammer mit der zweiten Expansionskammer verbindet. Somit kann auch die während des Dämpfungsvorgangs in der zweiten Kompressionskammer komprimierte Luft über den Steuerkanal und die Öffnung der zweiten Expansionskammer entweichen.

Die Dämpfungswirkung dieser zweiten Ausgestaltung der Erfindung ist höher als bei der ersten Ausführungsform. Daher eignet sich diese Ausgestaltung insbesondere zur Dämpfung von Massen mit mittlerer kinetischer Energie, wie z.B. einer Schublade oder einer größeren Möbeltüre.

Schließlich ist in einer dritten Ausgestaltung der Erfindung eine Kombination von Merkmalen der ersten beiden Ausführungsformen vorgesehen. Hierbei weist der zweite Kolben, ähnlich wie im ersten Ausführungsbeispiel beschrieben, in Längsrichtung einen Steuerkanal in Form einer durchgehenden Bohrung auf, der die erste Kompressionskammer mit der zweiten Kompressionskammer verbindet. Wie bei der zweiten Ausgestaltung ist an der Innenwand und in Längsrichtung des zweiten Zylinders, ausgehend vom Endbereich des Zylinders, ein Steuerkanal angeordnet, der sich über eine bestimmte Länge des Zylinders erstreckt und während eines bestimmten Abschnitts des Arbeitswegs des zweiten Kolbens die zweite Kompressionskammer mit der zweiten Expansionskammer verbindet.

Die während des Dämpfungsvorgangs in der ersten Kompressionskammer komprimierte Luft entweicht zunächst in die zweite Kompressionskammer und verstärkt dadurch insgesamt die Kompression solange, bis der zweite Kolben in den Bereich des Steuerkanal des zweiten Zylinders gelangt, und die Luft über den Steuerkanal und über die Bohrung der zweiten Expansionskammer in Freie entweichen kann.

Diese Ausgestaltung eignet sich aufgrund der auftretenden hohen Kompressionskräfte insbesondere zur Abbremsung von Massen mit relativ großer kinetischer Energie, wie z.B. einer großen Schublade.

Bei allen Ausführungsformen bestimmten nicht nur die Geometrie und der Durchmesser der Steuerkanäle die Dämpfungswirkung sondern auch die Entlüftungsbohrung bzw. Leckluftkanäle können zur Dämpfungsregelung einbezogen werden.

Im Folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Figur 1 zeigt einen Schnitt durch eine erste Ausführungsform der erfindungsgemäßen Dämpfungsvorrichtung.

Figur 2 zeigt die Seitenansicht der Dämpfungsvorrichtung nach Figur 1.

Figur 3 zeigt einen Schnitt der Dämpfungsvorrichtung nach Figur 1 nach dem halben Arbeitsweg.

Figur 4 zeigt einen Schnitt der Dämpfungsvorrichtung nach Figur 1 nach dem totalen Arbeitsweg.

Figur 5 zeigt vergrößert den Ausschnitt D aus Figur 4 mit einem Kanal für die komprimierte Luft.

Figur 6 zeigt eine Explosionszeichnung der Dämpfungsvorrichtung nach Figur 1.

Figur 7 zeigt eine zweite Ausgestaltung der Dämpfungsvorrichtung mit einer anderen Anordnung der Steuerkanäle.

Figur 8 zeigt den vergrößerten Ausschnitt F aus Figur 7.

Figur 9 zeigt eine dritte Ausführungsform der Erfindung.

Figur 10 zeigt vergrößert den Ausschnitt H aus Figur 9.

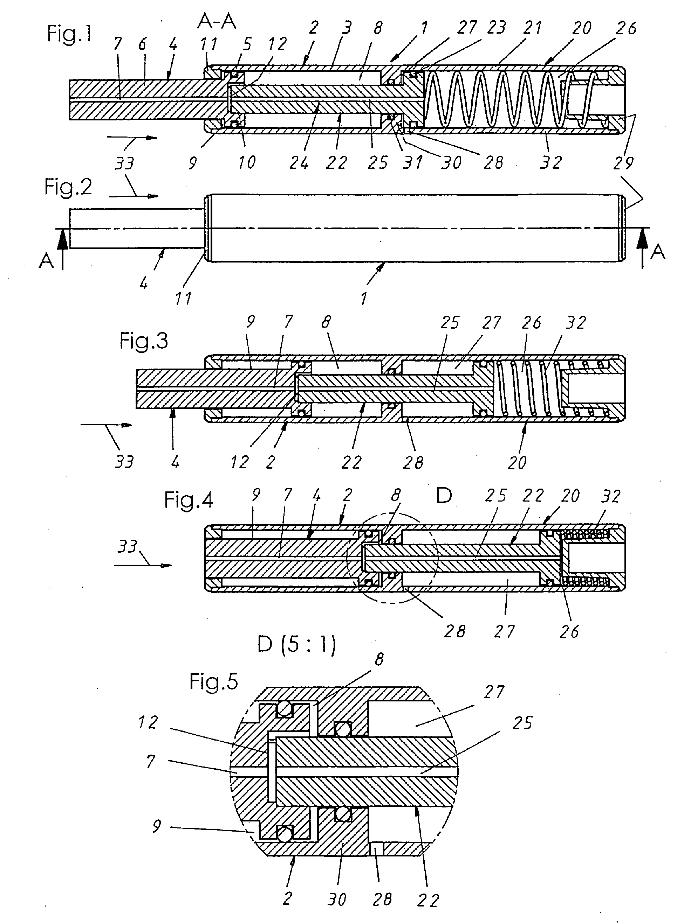

Die Figuren 1 bis 6 zeigen eine erste Ausführungsform der Erfindung. Wie man in Figur 1 erkennt besteht die Dämpfungsvorrichtung 1 aus zwei hintereinander angeordneten Dämpfungselementen 2, 20. Jedes Dämpfungselement ist als Luftdämpfer ausgebildet und umfasst einen Zylinder 3, 21, wobei beide Zylinder 3, 21 ein gemeinsames Gehäuse aufweisen.
Innerhalb des ersten Zylinders 3 ist ein darin längs verschiebbarer ersten Kolben 4 angeordnet, im zweiten Zylinder 21 ein darin längs verschiebbarer zweiter Kolben 22.
Durch die Kolben wird jeder der Zylinder 3, 21 in jeweils eine Kompressionskammer 8 bzw. 26 und eine jeweils eine Expansionskammer 9 bzw. 27 veränderlichen Volumens unterteilt. Die Kolben 4, 22 sind abdichtend in den Zylindern 3, 21 geführt, das heißt bei jedem Dämpfungselement ist zwischen dem größten Durchmesser des entsprechenden Kolbens und dem Innendurchmesser des zugeordneten Zylinders eine Dichtung 5 bzw. 23 vorgesehen, welche die jeweilige Kompressionskammer 8 bzw. 26 gegenüber der zugeordneten Expansionskammer 9 bzw. 27 abdichtet.

Die Kolbenstange 6 des ersten Kolbens 4 ragt durch eine Öffnung eines Zylinderdeckels 11 ins Freie, während die Kolbenstange 24 des zweiten Kolbens, mittels einer Dichtung 31 abgedichtet, durch eine Trennwand 30 zwischen den beiden Zylindern geführt ist und mit ihrer Stirnseite in eine zentrische Ausnehmung 10 des ersten Kolbens 4 eingesteckt ist. Eine Seitenansicht der Dämpfungsvorrichtung ist in Figur 2 dargestellt.

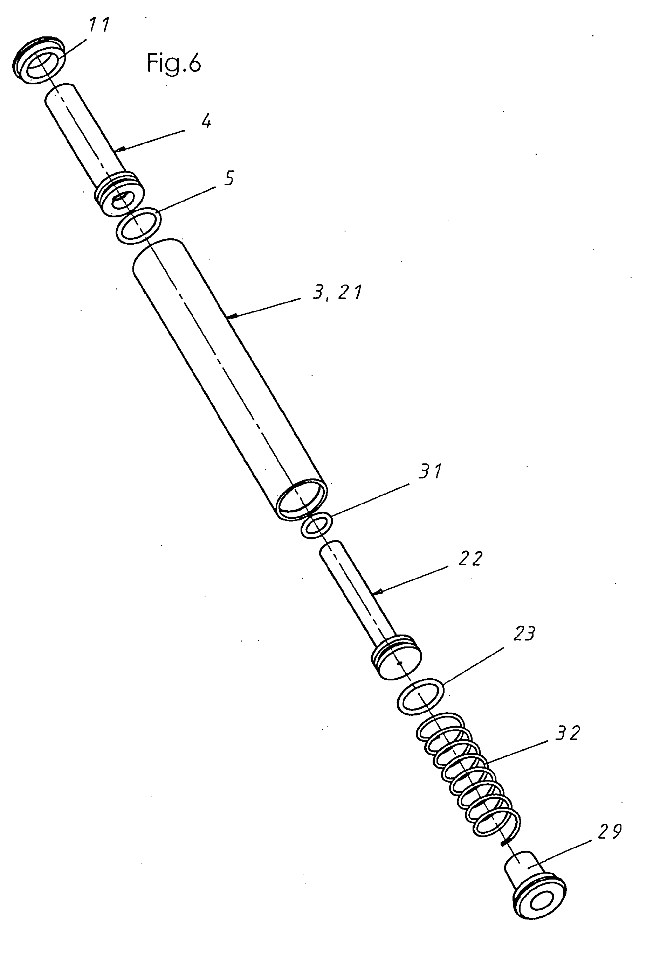

Figur 3 zeigt die Stellung der Kolben etwa auf halben Verschiebeweg. Hierbei wurde die erste Kolbenstange 6 von einem beweglichen Möbelteil beaufschlagt, wodurch sich die Kolben in Pfeilrichtung 33 verschieben, und die Luft in beiden Kompressionskammern 8, 26 gleichzeitig komprimiert wird.
In jedem Kolben 4, 22 ist eine durchgehende Bohrung eingebracht, die einen Steuerkanal 7 bzw. 25 ausbildet. Die in den Kompressionskammern 8, 26 komprimierte Luft kann kontrolliert über die Steuerkanäle 7, 25 entweichen. Die Luft in der zweiten Kompressionskammer 26 gelangt direkt in die zentrische Bohrung 25 des zweiten Kolbens 22, während die Luft der ersten Kammer 8 über einen Kanal 12 im ersten Kolben 4 in die zentrische Kolbenstangenbohrung strömt (Figur 5). Der zur gleichen Zeit in der zweiten Expansionskammer entstehende Unterdruck zieht durch eine Öffnung 28 Luft nach und ist durch Verändern dieser Öffnung zusätzlich steuerbar. Der in der ersten Expansionskammer entstehende Unterdruck zieht Leckluft durch einen Spalt (Spiel) zwischen der ersten Kolbenstange 4 und dem Zylinderdeckel 11.

Die Figuren 4 und 5 zeigen die beiden Kolben 4, 22 in ihrer Endstellung. Die Rückstellung der Kolben 4, 22 nach einem Dämpfungsvorgang in ihrer Anfangsstellung erfolgt über eine Druckfeder 32, die in der zweiten Kammer zwischen dem Boden des zweiten Kolbens 22 und dem Zylinderboden 29 angeordnet ist.

Figur 6 zeigt eine Explosionszeichnung der Dämpfungsvorrichtung in der ersten Ausgestaltung.

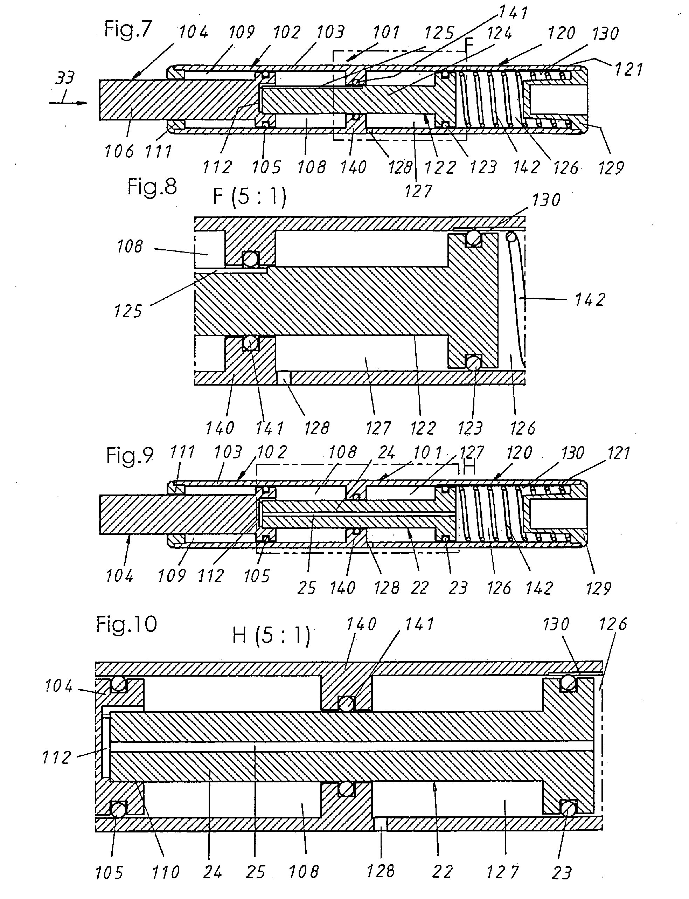

Die Figuren 7 und 8 zeigen eine zweite Ausgestaltung der Erfindung. In dieser Ausgestaltung der Erfindung ist an der Außenseite und in Längsrichtung der zweiten Kolbenstange 124, ausgehend von deren freiem Ende, ein Steuerkanal 125 angeordnet, der sich über eine bestimmte Länge der Kolbenstange 124 erstreckt und während eines bestimmten Abschnitts des Arbeitswegs des zweiten Kolbens 122 die erste Kompressionskammer 108 mit der zweiten Expansionskammer 127 verbindet. Die während des Dämpfungsvorgangs in der ersten Kompressionskammer 108 komprimierte Luft kann dadurch über den Steuerkanal 125 und die Öffnung 128 der zweiten Expansionskammer 127 entweichen.
Außerdem ist an der Innenwand und in Längsrichtung des zweiten Zylinders 121, ausgehend vom Endbereich des Zylinders, ein weiterer Steuerkanal 130 angeordnet, der sich über eine bestimmte Länge des Zylinders 121 erstreckt und während eines bestimmten Abschnitts des Arbeitswegs des zweiten Kolbens die zweite Kompressionskammer 126 mit der zweiten Expansionskammer 127 verbindet. Somit kann auch die während des Dämpfungsvorgangs in der zweiten Kompressionskammer 126 komprimierte Luft über den Steuerkanal 130 und die Öffnung 128 der zweiten Expansionskammer 127 entweichen.
Beide Steuerkanäle 125, 130 haben eine bestimmte Länge, wodurch der Einsatzpunkt der Entlüftung der Kompressionskammern 108, 126 gezielt gesteuert werden kann. Die jeweilige Länge der Steuerkanäle 125, 130 bestimmt den Zeitpunkt der Dämpfwirkung und die Menge der durchströmenden Luft, das heißt die Intensität der Dämpfung.

Schließlich zeigen die Figuren 9 und 10 eine dritte Ausführungsform der Erfindung.
Hierbei weist der zweite Kolben 24, ähnlich wie in der ersten Ausführungsform beschrieben, in Längsrichtung einen Steuerkanal 25 in Form einer durchgehenden Bohrung auf, der die erste Kompressionskammer 108 mit der zweiten Kompressionskammer 126 verbindet.
Ähnlich wie bei der zweiten Ausgestaltung ist an der Innenwand und in Längsrichtung des zweiten Zylinders 121, ausgehend vom Endbereich des Zylinders, ein Steuerkanal 130 angeordnet, der sich über eine bestimmte Länge des Zylinders 121 erstreckt und während eines bestimmten Abschnitts des Arbeitswegs des zweiten Kolbens 22 die zweite Kompressionskammer 126 mit der zweiten Expansionskammer 127 verbindet.

Wie insbesondere aus Figur 10 deutlich wird, strömt die komprimierte Luft von der ersten Kompressionskammer 127 über den Kanal 124 im ersten Kolben 104 in den axialen Steuerkanal 25 im zweiten Kolben 22 und gelangt in die zweite Kompressionskammer 126. Die Kompression in der zweiten Kompressionskammer 126 wird dadurch verstärkt und zwar solange, bis der zweite Kolben 24 in den Bereich des Steuerkanals 130 gelangt und die Luft über den Steuerkanal 130 in der Zylinderwand hinter den Kolben in die zweite Expansionskammer 127 und über die Öffnung 128 weiter ins Freie strömen kann.

### Liste der Bezugszeichen

- 1: Dämpfungsvorrichtung
- 2: Erstes Dämpfungselement
- 3: Zylinder
- 4: Kolben
- 5: Dichtung
- 6: Kolbenstange
- 7: Steuerkanal
- 8: Kompressionskammer
- 9: Expansionskammer
- 10: Aussparung
- 11: Zylinderdeckel
- 12: Luftkanal

- 20: Zweites Dämpfungselement
- 21: Zylinder
- 22: Kolben
- 23: Dichtung
- 24: Kolbenstange
- 25: Steuerkanal
- 26: Kompressionskammer
- 27: Expansionskammer
- 28: Bohrung
- 29: Zylinderboden

- 30: Trennwand
- 31: Dichtung
- 32: Druckfeder
- 33: Pfeilrichtung

- 101: Dämpfungsvorrichtung
- 102: Erstes Dämpfungselement
- 103: Zylinder
- 104: Kolben
- 105: Dichtung
- 106: Kolbenstange

- 108: Kompressionskammer
- 109: Expansionskammer
- 110: Aussparung
- 111: Zylinderdeckel
- 112: Luftkanal

- 120: Zweites Dämpfungselement
- 121: Zylinder
- 122: Kolben
- 123: Dichtung
- 124: Kolbenstange
- 125: Steuerkanal
- 126: Kompressionskammer
- 127: Expansionskammer
- 128: Bohrung
- 129: Zylinderboden
- 130: Steuerkanal

- 140: Trennwand
- 141: Dichtung
- 142: Druckfeder

## Patentansprüche

1. Dämpfungsvorrichtung (1) zur Dämpfung der Bewegungsenergie von beweglichen Möbelteilen, welche umfasst:
ein erstes Dämpfungselement (2; 102) mit einem ersten Zylinder (3; 103) und
einem darin längs verschiebbaren ersten Kolben (4; 104), und
mindestens ein zweites Dämpfungselement (20; 120) mit einem zweiten Zylinder (21; 121) und einem darin längs verschiebbaren zweiten Kolben (22; 122),
wobei die beiden Dämpfungselemente in serieller Anordnung hintereinander angeordnet sind und eine integrale Anordnung bilden,
**dadurch gekennzeichnet,**
**dass** jedes der beiden Dämpfungselemente (2, 20; 102; 120) als Luftdämpfer ausgebildet ist und jeweils eine Kompressionskammer (8 bzw. 26; 108 bzw. 126) und eine Expansionskammer (9 bzw. 27; 109 bzw. 127) veränderlichen Volumens umfasst; wobei die Dämpfungswirkung der Dämpfungselemente durch Steuerkanäle (7, 12, 112, 125, 130), beeinflusst wird, welche die Luftverteilungen und -strömungen innerhalb und zwischen den Kompressionskammern und/oder den Expansionskammern steuern.

2. Dämpfungsvorrichtung nach Anspruch 1, **dadurch gekennzeichnet, dass** bei jedem Dämpfungselement (2; 20; 102, 120) zwischen dem größten Durchmesser des entsprechenden Kolbens und dem Innendurchmesser des zugeordneten Zylinders eine Dichtung (5, 23; 105, 123) vorgesehen ist.

3. Dämpfungsvorrichtung nach einem der Ansprüche 1 oder 2, **dadurch gekennzeichnet, dass** der Kolben des ersten Dämpfungselements mit dem Kolben des zweiten Dämpfungselements während des gesamten Arbeitsweges der Dämpfungsvorrichtung unmittelbar in Wirkverbindung steht.

4. Dämpfungsvorrichtung nach einem der Ansprüche 1 bis 3, **dadurch gekennzeichnet, dass** sich die zweite Expansionskammer unmittelbar an die erste Kompressionskammer anschließt und durch eine Trennwand (30; 140) von dieser getrennt ist.

5. Dämpfungsvorrichtung nach einem der Ansprüche 1 bis 4, **dadurch gekennzeichnet, dass** die Kolbenstange des zweiten Kolbens durch eine Öffnung in der Trennwand (30; 140) in die erste Kompressionskammer hinein ragt, wobei die Stirnseite der zweiten Kobenstange in einer entsprechenden Aussparung (10; 110) des ersten Kolbens aufgenommen ist.

6. Dämpfungsvorrichtung nach einem der Ansprüche 1 bis 5, **dadurch gekennzeichnet, dass** zwischen der Kolbenstange des zweiten Kolbens und der Bohrung der Trennwand eine Dichtung (31; 141) angeordnet ist.

7. Dämpfungsvorrichtung nach einem der Ansprüche 1 bis 6, **dadurch gekennzeichnet, dass** im zweiten Dämpfungselement eine Feder (32; 142) zur Ausübung einer Rückstellkraft auf die Dämpfungselemente angeordnet ist.

8. Dämpfungsvorrichtung nach einem der Ansprüche 1 bis 7, **dadurch gekennzeichnet, dass** die zweite Expansionskammer über eine Öffnung (28; 128) mit der Außenumgebung verbunden ist.

9. Dämpfungsvorrichtung nach einem der Ansprüche 1 bis 8, **dadurch gekennzeichnet, dass** die Kolbenstange des ersten Kolbens durch einen Zylinderdeckel (11; 111) ins Freie geführt ist, wobei die erste Expansionskammer über einen zwischen Zylinderdeckel (11; 111) und Kolbenstange (4; 104) verbleibenden Spalt mit der Außenumgebung verbunden ist.

10. Dämpfungsvorrichtung nach einem der Ansprüche 1 bis 9, **dadurch gekennzeichnet, dass** der erste Kolben (4) in Längsrichtung einen Steuerkanal (7) in Form einer durchgehenden Bohrung aufweist, der die erste Kompressionskammer (8) mit der Außenumgebung verbindet.

11. Dämpfungsvorrichtung nach einem der Ansprüche 1 bis 10, **dadurch gekennzeichnet, dass** der zweite Kolben (22) in Längsrichtung einen Steuerkanal (25) in Form einer durchgehenden Bohrung aufweist, der die zweite Kompressionskammer (26) mit der Außenumgebung verbindet.

12. Dämpfungsvorrichtung nach einem der Ansprüche 1 bis 11, **dadurch gekennzeichnet, dass** die beiden Steuerkanäle (7, 25) untereinander luftleitend verbunden sind.

13. Dämpfungsvorrichtung nach einem der Ansprüche 1 bis 12, **dadurch gekennzeichnet, dass** im Bereich der Aussparung (10) ein Leckluftkanal (12) ausgebildet ist, der die erste Kompressionskammer (8) mit dem Steuerkanal (7) verbindet.

14. Dämpfungsvorrichtung nach einem der Ansprüche 1 bis 9, **dadurch gekennzeichnet, dass** an der Außenseite und in Längsrichtung der zweiten Kolbenstange (124), ausgehend von deren freiem Ende, ein Steuerkanal (125) angeordnet ist, der sich über eine bestimmte Länge der Kolbenstange (124) erstreckt und während eines bestimmten Abschnitts des Arbeitswegs des zweiten Kolbens (122) die erste Kompressionskammer (108) mit der zweiten Expansionskammer (127) verbindet.

15. Dämpfungsvorrichtung nach einem der Ansprüche 1 bis 9 oder 14, **dadurch gekennzeichnet, dass** an der Innenwand und in Längsrichtung des zweiten Zylinders (121), ausgehend vom Endbereich des Zylinders, ein Steuerkanal (130) angeordnet ist, der sich über eine bestimmte Länge des Zylinders erstreckt und während eines bestimmten Abschnitts des Arbeitswegs des zweiten Kolbens (124) die zweite Kompressionskammer (126) mit der zweiten Expansionskammer (127) verbindet.

16. Dämpfungsvorrichtung nach einem der Ansprüche 1 bis 9, **dadurch gekennzeichnet, dass** der zweite Kolben (22) in Längsrichtung einen Steuerkanal (25) in Form einer durchgehenden Bohrung aufweist, der die erste Kompressionskammer (108) mit der zweiten Kompressionskammer (127) verbindet.

17. Dämpfungsvorrichtung nach einem der Ansprüche 1 bis 9 oder 16, **dadurch gekennzeichnet, dass** an der Innenwand und in Längsrichtung des zweiten Zylinders (121), ausgehend vom Endbereich des Zylinders, ein Steuerkanal (130) angeordnet ist, der sich über eine bestimmte Länge des Zylinders erstreckt und während eines bestimmten Abschnitts des Arbeitswegs des zweiten Kolbens (22) die zweite Kompressionskammer (126) mit der zweiten Expansionskammer (127) verbindet.
